**Europäisches Patentamt**

**European Patent Office**

**Office européen des brevets**

(19)

(11) Veröffentlichungsnummer : **0 452 653 B1**

(12)

# EUROPÄISCHE PATENTSCHRIFT

(45) Veröffentlichungstag der Patentschrift :
**22.06.94 Patentblatt 94/25**

(51) Int. Cl.⁵ : **C10J 3/46,** C10J 3/48

(21) Anmeldenummer : **91103261.3**

(22) Anmeldetag : **05.03.91**

(54) **Verfahren zur Vergassung von feinkörnigen bis staubförmigen Brennstoffen mit nachgeschaltetem kombinierten Gas-/und Dampfturbinenkraftwerk.**

(30) Priorität : **14.04.90 DE 4012085**

(43) Veröffentlichungstag der Anmeldung :
**23.10.91 Patentblatt 91/43**

(45) Bekanntmachung des Hinweises auf die Patenterteilung :
**22.06.94 Patentblatt 94/25**

(84) Benannte Vertragsstaaten :
**DE DK ES GB NL**

(56) Entgegenhaltungen :
**EP-A- 0 077 852**
**US-A- 4 328 006**
**US-A- 4 852 997**

(73) Patentinhaber : **Krupp Koppers GmbH**
**Altendorfer Strasse 120**
**D-45143 Essen (DE)**

(72) Erfinder : **Dziobek, Frank**
**Walkmühlenstrasse 113**
**W-4330 Mülheim/Ruhr (DE)**
Erfinder : **Hufen, Klaus**
**Wortbergrode 14**
**W-4300 Essen (DE)**

EP 0 452 653 B1

Jouve, 18, rue Saint-Denis, 75001 PARIS

**Beschreibung**

Die vorliegende Erfindung betrifft ein Verfahren zur Vergasung von feinkörnigen bis staubförmigen Brennstoffen bei einem Druck von mindestens 10 bar mit einer Temperatur von mindestens 1400°C, wobei das erzeugte, im wesentlichen CO- und $H_2$-haltige Partialoxidationsgas in einem dem Vergasungsreaktor nachgeschalteten kombinierten Gas- und Dampfturbinenkraftwerk genutzt und die anfallende Schlacke im schmelzflüssigen Zustand aus dem Vergasungsreaktor abgezogen und durch Kühlung mit Wasser zum Erstarren gebracht wird.

Bei der Vergasung von feinkörnigen bis staubförmigen Brennstoffen unter den vorstehend genannten Temperaturbedingungen wird die Asche des eingesetzten Brennstoffes über ihren Schmelzpunkt hinaus erhitzt und fällt deshalb als schmelzflüssige Schlacke an. Diese sammelt sich am unteren Ende des Vergasungsreaktors und muß aus diesem abgezogen werden. Hierbei ist es üblich, die geschmolzene Schlacke in ein Wasserbad abzuziehen, in dem sie abgeschreckt und granuliert wird, wobei sich ein glasartiges, umweltverträglich lagerbares und verwendbares Material bildet. Im Zusammenhang mit der Vergasung unter erhöhtem Druck ist es aus der DE-C3-23 42 079 und der US-A-4 328 006 bekannt, den Vergasungsreaktor und das darunter befindliche Wasserbad in einem gemeinsamen Druckbehälter unterzubringen. Bei der Vorrichtung nach der US-A-4 328 006 ist hierbei das Wasserbad über eine Rohrschlange mit einem außerhalb des Druckgefäßes angeordneten Dampferzeuger verbunden. Aus der EP-A2-0 077 852 ist ferner ein hinter einem Synthesegasreaktor angeordneter Gaskühler bekannt, der aus einem von Strahlungskühlwänden begrenzten Fallschacht mit darunter angeordnetem Wasserbad zur Aufnahme und Kühlung der Schlacketeilchen besteht. Das Wasserbad wird dabei von oben nach unten von Kreislaufwasser durchströmt, wobei die Eintrittstemperatur des Kreislaufwassers in das Wasserbad zwischen dem Taupunkt des Synthesegases als unterer Grenze und dem Wasserverdampfungspunkt beim Druck des Synthesegases als oberer Grenze liegen soll. Vorzugsweise soll die Wassertemperatur dabei im unteren Drittel dieses Temperaturintervalls gehalten werden. Das Kreislaufwasser wird zu diesem Zweck durch einen außerhalb des Gaskühlers angeordneten Wärmeüberträger gekühlt, wobei die dadurch abgeführte Wärme zur Speisewasservorwärmung genutzt werden kann.

Das heißt, bei der Abkühlung der Schlacke hat man bisher das erwärmte Wasser aus dem Kreislauf abgezogen, sobald die Wassertemperatur einen Wert von ca. 40°C erreicht hatte. Diese Methode hat jedoch den Nachteil, daß hierbei große, bis zu 1000 t/h betragende Kühlwassermengen anfallen, die im Kreislauf geführt werden müssen und für die auf Grund ihrer verhältnismäßig niedrigen Temperatur keine ausreichende Nutzungsmöglichkeit gegeben ist. Wird die Vergasung im Verbund mit einem kombinierten Gas- und Dampfturbinenkraftwerk betrieben, so kann zwar ein Teil der auf diese Weise anfallenden Niedertemperaturwärme zur Speisewasservorwärmung genutzt werden. Ist jedoch der hierfür erforderliche Bedarf an Niedertemperaturwärme gedeckt, dann kann ein weiteres Angebot von Niedertemperaturwärme nicht mehr zur Stromerzeugung genutzt werden. In der Praxis bedeutet dies, daß bei der bisherigen Arbeitsweise in den allermeisten Fällen der überwiegende Teil des Wärmeinhaltes der flüssigen Schlacke ohne Nutzungsmöglichkeit für das Vergasungsverfahren und die anschließende Produktgasnutzung verloren geht. Es liegt auf der Hand, daß dieser Nachteil umso schwerwiegender ist, je höher der Aschegehalt des eingesetzten Brennstoffes ist, denn mit steigendem Aschegehalt steigt die Menge der anfallenden flüssigen Schlacke, deren Wärmeinhalt bei der Kühlung im Wasserbad verloren geht. Dadurch sinkt der Gesamtwirkungsgrad des Verfahrens entsprechend. Die nachfolgende Tabelle verdeutlicht das an einem Ausführungsbeispiel, bei dem einmal Kohle mit niedrigem und einmal Kohle mit hohem Aschegehalt vergast wurde. In beiden Fällen wurde das erzeugte Partialoxidationsgas in einem kombinierten Gas- und Dampfturbinenkraftwerk genutzt, dessen Kraftwerksbruttoleitung bei ca. 197 MW lag.

| | | Kohle A | Kohle B |
|---|---|---|---|
| Aschegehalt | (Gew.-%) | 11,8 | 40,0 |
| Kohlemenge | (kg/s) | 15,9 | 24,5 |
| zugeführter Wärmestrom im Schlackesystem | (MJ/s) | 405 | 421 |
| enthaltene Wärme | (MJ/S) | 3,3 | 17,3 |
| Gesamtwirkungsgrad | (%) | 43,0 | 40,9 |

Der Erfindung liegt deshalb die Aufgabe zugrunde, das Verfahren der eingangs genannten Art dahingehend zu verbessern, daß der Verlust des Wärmeinhaltes der flüssigen Schlacke weitgehend vermieden und gleichzeitig der Gesamtwirkungsgrad entsprechend erhöht wird.

Dies wird erfindungsgemäß dadurch erreicht, daß das für die Kühlung der Schlacke verwendete Wasser bei einer Temperatur gehalten wird, die 20 bis 30°C unter seiner dem jeweiligen Vergasungsdruck entsprechenden Siedetemperatur liegt und die gewünschte Wassertemperatur dadurch eingehalten wird, daß ein Teilstrom des Wassers jeweils abgezogen und im Kreislauf durch einen Dampferzeuger geleitet und dort im indirekten Wärmeaustausch gekühlt wird, wobei der dabei erzeugte Dampf der Dampfturbine des Gas- und Dampfturbinenkraftwerkes zugeführt wird.

Das heißt, der besondere Vorteil des erfindungsgemäßen Verfahrens besteht darin, daß die fühlbare Wärme der Schlacke zur Erzeugung von Dampf genutzt wird, der dann unmittelbar zur Stromerzeugung in der Dampfturbine des Kraftwerkes herangezogen werden kann. Hierbei wird durch das Unterschreiten der dem Vergasungsdruck entsprechenden Siedetemperatur des wärmeübertragenden Wassers verhindert, daß größere Dampfmengen in den Vergasungsreaktor gelangen und dort den Vergasungsprozeß stören sowie das erzeugte Partialoxidationsgas verunreinigen können. Andererseits wird man bei der Durchführung des erfindungsgemäßen Verfahrens bestrebt sein, innerhalb der weiter oben angegebenen Grenzen eine möglichst hohe Wassertemperatur einzuhalten, um möglichst viel hochwertigen Dampf erzeugen zu können.

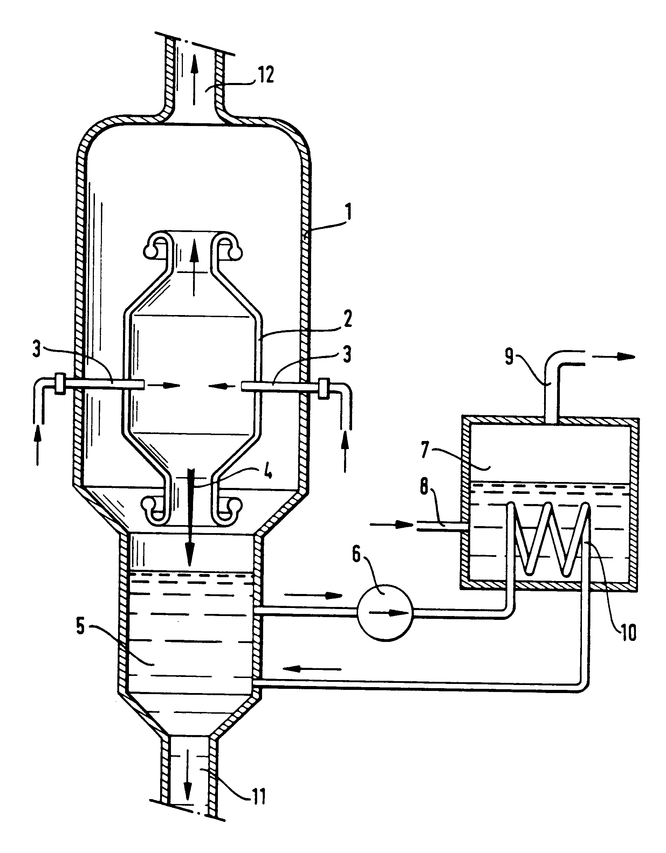

Die Erfindung soll durch das nachfolgende Ausführungsbeispiel an Hand der Figur weiter erläutert werden. Diese Figur zeigt dabei gleichzeitig in schematischer Darstellung die zur Durchführung des erfindungsgemäßen Verfahrens geeignete Vorrichtung.

Hierbei befindet sich im Druckgefäß 1 der Vergasungsreaktor 2, der mit einem oder mehreren Vergasungsbrennern 3 ausgerüstet sein kann. Der Vergasungsreaktor 2 kann in an sich bekannter Weise als sogenannter Rohrkorb ausgebildet sein, der der Dampferzeugung dient. Es sind selbstverständlich aber auch andere Ausführungsformen möglich, bei denen die Kühlung des Vergasungsreaktors 2 durch einen Wassermantel erfolgt. Nach unten hin verjüngt sich das Druckgefäß etwas und dient in diesem Bereich der Aufnahme des Wasserbades 5. Im vorliegenden Ausführungsbeispiel wird die Vergasung bei einem Druck von 30 bar und einer Temperatur von 1600 °C durchgeführt, so daß die anfallende, schmelzflüssige Schlacke mit dieser Temperatur aus dem Vergasungsreaktor 2 in Richtung des Pfeiles durch die Öffnung 4 in das darunter liegende Wasserbad 5 tropft.

Mit Hilfe des darin befindlichen Wassers, das im vorliegenden Falle bei einer Temperatur von ca. 180 °C gehalten wird, erstarrt die Schlacke. Um das Wasser auf dem vorgegebenen Temperaturniveau zu halten, wird ein Teilstrom des Wassers aus dem Wasserbad 5 abgezogen und durch die Pumpe 6 im Kreislauf durch die Rohrschlange 10 gefördert. Diese verbindet das Wasserbad 5 mit dem Dampferzeuger 7, in dem das durch die Rohrschlange 10 fließende Wasser die notwendige Abkühlung erfährt, bevor es in das Wasserbad 5 zurückgelangt. Das erforderliche Speisewasser wird dem Dampferzeuger 7 über die Leitung 8 zugeführt und der dort erzeugte Dampf wird über die Leitung 9 abgezogen. Dieser Dampf wird erfindungsgemäß der Dampfturbine des in der Abbildung nicht dargestellten Gas- und Dampfturbinenkraftwerkes zugeführt und so zur Stromerzeugung genutzt. Die im Wasserbad 5 anfallende granulierte Schlacke kann über die Schlackenaustragsöffnung 11 abgezogen werden, während das bei der Vergasung erzeugte Partialoxidationsgas über den Gasaustritt 12 das Druckgefäß 1 verläßt, um nach entsprechender Abkühlung und Reinigung seiner Weiterverwertung im nachgeschalteten Gas- und Dampfturbinenkraftwerk zugeführt zu werden. Selbstverständlich können dabei im Druckgefäß 1 oberhalb des Vergasungsreaktors 2 noch andere, in der Abbildung nicht dargestellte, der Abkühlung des erzeugten Partialoxidationsgases dienende Einbauten angeordnet sein. Ebenso können die Wände des Druckgefäßes 1 mit einer Wasserkühlung ausgerüstet sein.

Im vorliegenden Ausführungsbeispiel wurden bei einem Durchsatz von ca. 77 t/h Kohle mit einem Aschegehalt von 40 % im Dampferzeuger 7 ca. 21 t/h Dampf erzeugt, die in den Dampfturbinen des Gas- und Dampfturbinenkraftwerkes in eine zusätzliche elektrische Leistung von ca. 4 MW/h umgewandelt wurden. Bei einer jährlichen Nutzungsdauer von 6000 Stunden und einem Strompreis von 0,15 DM pro kWh ergibt sich hieraus eine jährliche Gutschrift von 3 600 000 DM. Gleichzeitig wird der Gesamtwirkungsgrad der Anlage um 1 % erhöht.

Die Vorteile des erfindungsgemäßen Verfahrens lassen sich wie folgt zusammenfassen:
- Der Gesamtwirkungsgrad eines kombinierten Gas- und Dampfturbinenkraftwerkes mit integrierter Kohlevergasungsanlage wird angehoben. Das gilt insbesondere dann, wenn Brennstoffe mit hohen Aschegehalten eingesetzt werden.
- Der Kühlwasserbedarf bei der Schlackengranulierung wird deutlich verringert.
- Es wird kein erwärmtes Kühlwasser an die Umwelt abgegeben.
- Die hohe jährliche Gutschrift läßt neben der Deckung möglicher Zusatzinvestitionen einen Überschuß erwarten.

- Die gegenüber der bisherigen Lösung deutlich erhöhte Temperatur des Kühlwassers bei der Schlackengranulierung bewirkt, daß im Bereich oberhalb des Wasserspiegels keine Taupunktunterschreitung stattfindet. Dadurch wird der korrosive Angriff durch die im Gaskondensat enthaltenen Komponenten $H_2S$ und HCl weitestgehend unterbunden.

**Patentansprüche**

1. Verfahren zur Vergasung von feinkörnigen bis staubförmigen Brennstoffen bei einem Druck von mindestens 10 bar und einer Temperatur von mindestens 1400°C, wobei das erzeugte, im wesentlichen CO- und $H_2$-haltige Partialoxidationsgas in einem dem Vergasungsreaktor nachgeschalteten kombinierten Gas- und Dampfturbinenkraftwerk genutzt und die anfallende Schlacke im schmelzflüssigen Zustand aus dem Vergasungsreaktor abgezogen und durch Kühlung mit Wasser zum Erstarren gebracht wird, wobei das für die Kühlung der Schlacke verwendete Wasser bei einer Temperatur gehalten wird, die 20 bis 30°C unter seiner dem jeweiligen Vergasungsdruck entsprechenden Siedetemperatur liegt und die gewünschte Wassertemperatur dadurch eingehalten wird, daß ein Teilstrom des Wassers jeweils abgezogen, im Kreislauf durch einen Dampferzeuger geleitet und dort im indirekten Wärmeaustausch gekühlt wird, wobei der dabei erzeugte Dampf der Dampfturbine des Gas- und Dampfturbinenkraftwerkes zugeführt wird.

**Claims**

1. Process for the gasification of fine-grained to dusty fuels at a pressure of at least 10 bar and a temperature of at least 1400°C, in which the partial oxidation gas generated, essentially containing CO and $H_2$, is utilised in a combined gas- and steam-turbine power station, downstream of the gasification reactor, and the slag arising is tapped in the molten state from the gasification reactor and caused to solidify by cooling with water, the water used for cooling the slag being maintained at a temperature 20 to 30°C below its boiling point corresponding to the gasification pressure at the time, and the desired water temperature being maintained by taking off a part stream of the water in each case, circulating it through a steam generator and cooling it therein by indirect heat exchange, the steam thus generated being fed to the steam turbine of the gas- and steam-turbine power station.

**Revendications**

1. Procédé de gazéification de combustibles finement granulés à pulvérulents à une pression d'au moins 10 bar et une température d'au moins 1400°C, dans lequel le gaz partiellement oxydé obtenu, contenant essentiellement CO et $H_2$, est utilisé dans une centrale combinée à turbines à gaz et à vapeur disposée après le réacteur de gazéification et où la scorie produite est soutirée à l'état liquide du réacteur de gazéification et est amenée à se solidifier par refroidissement à l'eau, dans lequel l'eau utilisée pour le refroidissement de la scorie est maintenue à une température qui est située de 20°C à 30°C en dessous de sa température d'ébullition correspondant à la pression de gazéification respective et la température d'eau désirée est respectée par le fait qu'un courant partiel de l'eau est soutiré, conduit dans le circuit à travers un générateur de vapeur et y est refroidi par un échange de chaleur indirect, et où la vapeur ainsi produite est envoyée à la turbine à vapeur de la centrale à turbines à gaz et à vapeur.